# FASCICULE DE BREVET EUROPEEN

(11) **EP 3 325 827 B1**
(45) Date de publication et mention de la délivrance du brevet: **23.10.2019**
(21) Numéro de dépôt: 16756720.5
(22) Date de dépôt: 19.07.2016
(51) Int. Cl.: F16B 39/24, F01D 25/24

(54) **ASSEMBLAGE COMPRENANT UN GOUJON DE FIXATION VERROUILLE**
ANORDNUNG MIT VERRIEGELTEM SICHERUNGSBOLZEN
ASSEMBLY COMPRISING A LOCKED SECURING STUD

(30) Priorité: 22.07.2015 FR 1556941
(43) Date de publication de la demande: 30.05.2018
(73) Titulaire: Safran Aircraft Engines, 75015 Paris (FR)
(72) Inventeur: GENDRAUD, Alain Dominique, 77550 Moissy-Cramayel (FR); DESFORGES, Jean-Baptiste Vincent, 77550 Moissy-Cramayel (FR); GENILIER, Arnaud, 77550 Moissy-Cramayel (FR); OUDYI, Reda, 77550 Moissy-Cramayel (FR)
(74) Mandataire: Brevalex
(86) Numéro de dépôt international: PCT/FR2016/051850
(87) Numéro de publication internationale: WO 2017/013349

(56) Documents cités:
- DE-B- 1 301 937
- US-A- 2 525 217
- US-A1- 2003 118 399

## Description

Le sujet de l'invention est un assemblage comprenant un goujon de fixation verrouillé.

Un tel agencement peut être appliqué à la fixation de deux carters circulaires de turbines, munis de brides circulaires planes qu'on accole. Les goujons traversent des perçages de ces brides et sont vissés dans un écrou prisonnier, intégré à une des brides, par une extrémité. Leur extrémité opposée reçoit un écrou de serrage grâce auquel les brides sont maintenues serrées l'un sur l'autre.

De tels assemblages doivent être maintenus avec une force de serrage suffisante pour se prémunir contre tout desserrage accidentel dû par exemple à des vibrations en service. On peut utiliser des outils dynamométriques pour appliquer des couples de vissage définis à l'avance. Des clés de verrouillage peuvent aussi être ajoutées pour interdire toute rotation de desserrage. Une clé de verrouillage est une pièce qui, dans sa réalisation la plus générale, est au contact du goujon de manière à le bloquer une fois qu'il a été mis en place. Dans une réalisation connue, les goujons comportent des portions à section polygonale, hexagonale par exemple, et les clés sont en forme de plaquette comprenant une paire d'empreintes de section également hexagonale qu'on enfile sur une paire de goujons consécutifs avant d'installer les écrous de serrage. Les goujons retiennent les deux extrémités de la clé en l'empêchant donc de tourner, et la clé retient chacun des goujons (d'après le document US 6 641 326 B2).

Un premier inconvénient de cette conception est que les goujons doivent être à des écartements déterminés et si possible uniformes, faute de quoi un grand nombre de largeurs des clés serait nécessaire. Or de tels écartements uniformes sont impossibles si une partie de la couronne de fixation doit être réservée à d'autres équipements comme des tubes de fluide, ou des sondes. Un autre inconvénient, souvent rencontré, est qu'il est problématique d'appliquer le couple de serrage sans risquer d'endommager certaines parties de l'assemblage comme la clé ou la bride. Un autre risque est que, si le vissage des goujons dans les écrous prisonniers est excessif, les écrous pourront être endommagés aussi, si par exemple une partie de plus grand diamètre du goujon entre en collision avec eux.

Le sujet de l'invention est un assemblage du genre décrit jusqu'à présent, dans lequel il est ajouté une clé de verrouillage individuelle, c'est-à-dire associée à un seul goujon, qui permette d'appliquer un couple de serrage suffisant pour assurer la rigidité de l'assemblage et qui ne soit susceptible ni d'être endommagée ni d'endommager des pièces adjacentes au cours de ce serrage, et qui soit aussi apte à éviter un vissage excessif du goujon par inadvertance.

Sous une forme générale, l'invention consiste en un assemblage comprenant un goujon de fixation, deux brides superposées traversées par le goujon, un écrou dépendant d'une des brides et dans lequel une extrémité du goujon est vissée, un écrou de serrage vissé à une extrémité opposée du goujon, et une clé de verrouillage serrée entre l'écrou de serrage et une autre des brides, la clé de verrouillage comprenant un corps principal muni d'un perçage, le perçage ayant une section non circulaire et étant occupé par une portion à section correspondante du goujon, caractérisé en ce que le corps principal se prolonge par une portion s'étendant au-delà d'une bordure de ladite autre bride dans une direction perpendiculaire au goujon puis par une portion saillant du corps principal en direction du goujon et s'étendant devant ladite bordure.

La portion saillante autorise une rotation d'angle limité du goujon une fois que la clé a été installée sur celui-ci, en entrant en butée contre la bride. On évite ainsi un vissage excessif du goujon qui pourrait endommager l'écrou prisonnier et obliger à un démontage complet de la structure pour remplacer alors cet écrou. Le couple de serrage spécifié peut néanmoins être appliqué au goujon, les efforts se localisant surtout dans la clé de verrouillage et dans les parties de la bride et du goujon qui lui sont adjacentes, ces parties étant dimensionnées de façon à être résistantes. L'ajustement de la clé de verrouillage sur le goujon est enfin facile.

De façon particulièrement préférée, la portion saillante du corps principal comprend une paire d'appuis séparés sur ladite autre bride, afin d'assurer dès le départ la position de la clé de verrouillage et son débattement angulaire autorisé.

Les appuis sont avantageusement conçus pour ne pouvoir causer aucun dommage contre la bride ; ils peuvent ainsi comprendre des contours arrondis.

L'invention sera maintenant décrite dans ses différents aspects, caractéristiques et avantages en liaison aux figures, qui représentent une réalisation de celle-ci :
- la figure 1 représente l'assemblage en coupe,
- la figure 2 représente le dispositif complet, comprenant un grand nombre de ces assemblages, en perspective,
- la figure 3 représente en détails l'appui de la clé de verrouillage sur le carter,
- les figures 4 et 5 représentent en perspective la clé de verrouillage,
- et la figure 6 représente le goujon isolé.

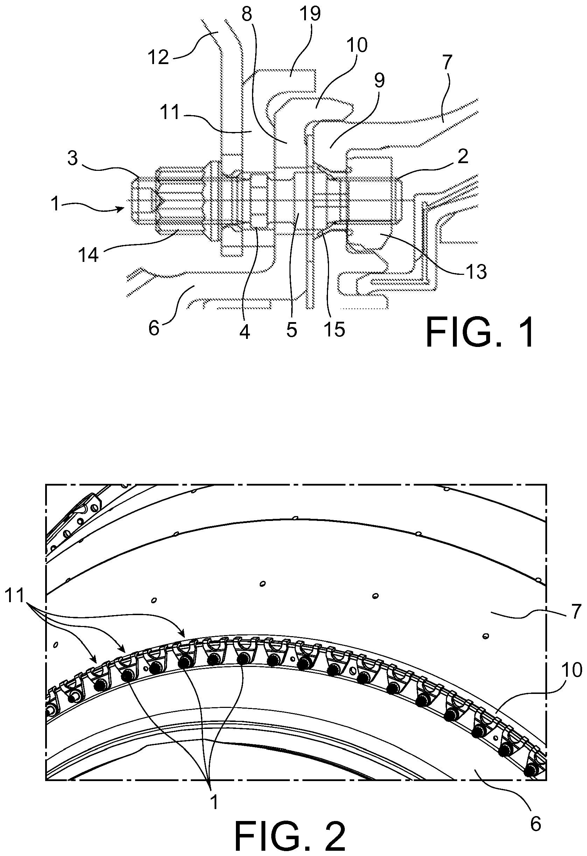

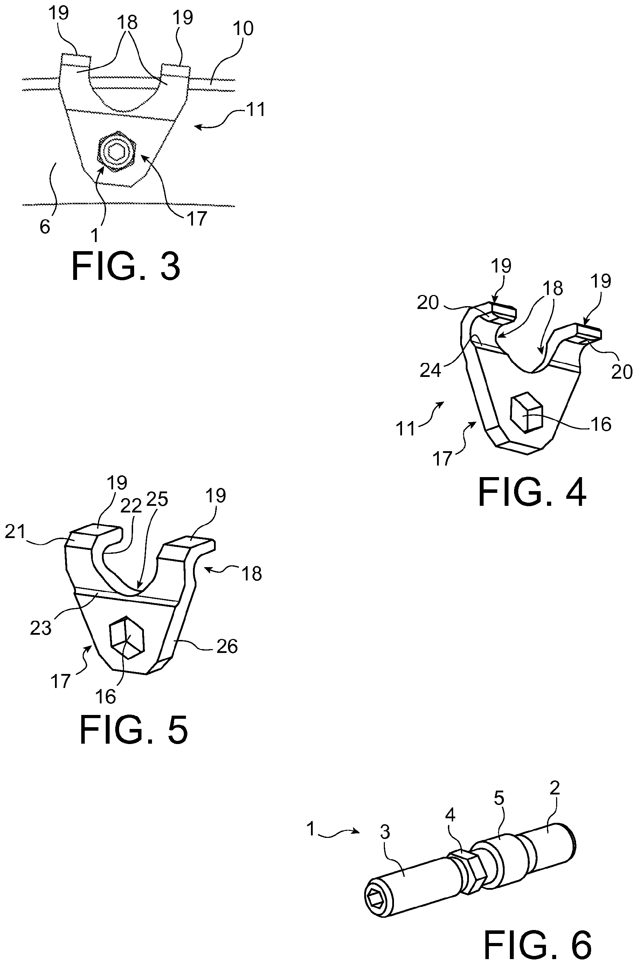

L'assemblage de la figure 1 comprend un goujon 1 dont les deux extrémités 2 et 3 opposées sont filetées, et dont la tige comprend, entre les extrémités 2 et 3, une partie médiane à section hexagonale (partie hexagonale 4), et une partie élargie 5. Le goujon 1 sert à assembler deux carters 6 et 7 qui comprennent chacun une bride 8 ou 9 circulaire et plane, et il pénètre pour cela dans des perçages alignés des brides 8 et 9 et les maintient superposées l'une sur l'autre. La bride 8 d'un des carters 6 comprend une bordure 10 de centrage, cylindrique et s'appuyant sur l'autre carter 7. L'assemblage comprend encore une clé de verrouillage 11 qui est un aspect essentiel de l'invention, éventuellement un support 12 d'un équipement non représenté - comme on en rencontre très fréquemment dans l'aéronautique - et deux écrous 13 et 14, l'écrou 13 étant un écrou prisonnier serti dans le carter 7 par une jupe 15 conique s'ouvrant vers l'autre carter 6 et l'écrou 14 étant un écrou de serrage. La première extrémité 2 est vissée dans l'écrou prisonnier 13, la portion élargie 5 est non loin de la jupe 15, la partie hexagonale 4 est située dans une empreinte 16 (représentée sur les figures 4 et 5) de la clé de verrouillage 11, et l'écrou de serrage 14 est engagé par vissage sur l'extrémité 3 opposée ; les brides 9, 8, la clé de verrouillage 11 et le support 12 sont serrés dans cet ordre de l'écrou prisonnier 13 à l'écrou de serrage 14.

A l'état de montage, l'arête antérieure de la section élargie 5 est proche de la jupe 15 et risque de frotter sur elle et de l'endommager, avec donc tout l'écrou prisonnier 13, si le goujon 1 est vissé excessivement. La clé de verrouillage 11 obvie à cette situation.

Elle est représentée aux figures 2, 3, 4 et 5. Elle comprend un corps principal 17 en forme de plaquette épaisse dans laquelle l'empreinte 16 est creusée. L'empreinte 16 a une section hexagonale de manière à pouvoir accueillir la partie hexagonale 4 avec un peu de jeu, mais en empêchant leur rotation mutuelle. Le corps principal 17 comprend encore deux ailes 18 séparées, qui le prolongent en saillant à côté l'une de l'autre et dans une même direction, incluse dans le plan d'extension principale du corps principal 17 ; cette direction est, en position de montage, la direction radiale extérieure, de sorte que les ailes 18 débordent de la bride 8 du carter 6 adjacent à la clé de verrouillage 11 et de la face plane de la bordure 10 qui la termine. L'extrémité des ailes 18 est recourbée en une bordure 19 qui surplombe la face périphérique de la bordure 10 à peu de distance d'elle dans un état de commencement de l'assemblage. A l'état définitif de l'assemblage, on observe la position de la figure 3, où la clé de verrouillage 11 a légèrement basculé et une des bordures 19 (à droite sur cette figure 3) est en appui sur la bordure 10 du carter 6. Les bordures 19 sont façonnées avec un appui arrondi 20 qui évite un contact sur une superficie trop petite et des concentrations de contrainte excessives.

Le mode d'assemblage est le suivant. Les brides 8 et 9 étant superposées et leurs perçages alignés, chacun des goujons 1 est introduit par l'extrémité 2 dans le perçage de la bride 8 puis celui de la bride 9 et l'extrémité 2 est vissée dans l'écrou prisonnier 13. Quand la partie élargie 5 atteint la jupe 15, le vissage est tout de suite interrompu et le goujon 1 est au contraire dévissé légèrement d'une quantité spécifiée, par exemple un huitième de tour. La clé de verrouillage 11 est introduite, et le goujon 1 est alors revissé et serré au couple spécifié par le réglage d'un outil dynamométrique, la clé de verrouillage 11 basculant jusqu'à ce qu'un des appuis arrondis 20 touche la bordure 10 de la bride 8 et que l'état de la figure 3 soit obtenu. Le mouvement de revissage est insuffisant pour que l'arête de la section élargie 5 touche de nouveau la jupe 15. Aucune contrainte excessive, aucun dommage n'est donc causé à l'écrou prisonnier 13. Le support 12 peut être alors installé quand il est prévu, et l'écrou de serrage 14 vissé à son tour. En cas de desserrage de l'assemblage, la rotation du goujon 1 est limitée au petit angle qui porte l'autre appui 20 contre la bordure 10.

Un grand avantage de la clé de verrouillage 11 conforme à l'invention est qu'elle est associée à un seul goujon 1 et qu'elle peut être installée facilement et sans imprévu. Sa résistance est suffisante pour une masse modérée. On remarque certains détails de conception permettant d'optimiser le compromis entre ces deux exigences : un chanfrein 21 établi sur les faces extérieures de raccordement des ailes 18 et des bordures 19, et un arrondi 22 au raccordement de leurs faces intérieures ; d'autres chanfreins 23 et 24 établis sur les deux faces du corps principal 17 à son raccordement avec les ailes 18, qui sont moins épaisses ; une concavité 25 à rayon de courbure constant opérée au milieu du bord radial extérieur du corps principal 17, au centre de ce bord et entre les ailes 18 ; une forme généralement triangulaire du corps principal 17, limitée par deux faces latérales 26 s'éloignant l'une de l'autre vers les ailes 18 ; et d'une façon générale la suppression des angles de raccordement trop aigus, remplacés encore par des chanfreins.

## Revendications

1. Assemblage comprenant un goujon (1) de fixation, deux brides (8, 9) superposées traversées par le goujon, un écrou (13) dépendant d'une des brides (9) et dans lequel une extrémité (2) du goujon est vissée, un écrou de serrage (14) vissé à une extrémité opposée (3) du goujon, et une clé de verrouillage (11) serrée entre l'écrou de serrage (14) et une autre des brides (8), la clé de verrouillage comprenant un corps principal (17) muni d'un perçage (16), le perçage ayant une section non circulaire et étant occupé par une portion (4) à section correspondante du goujon, **caractérisé en ce que** le corps principal (17) se prolonge par une portion (18) s'étendant au-delà d'une bordure (10) de ladite autre bride (8) dans une direction perpendiculaire au goujon (1) puis par une portion (19) saillant du corps principal en direction du goujon et s'étendant devant ladite bordure (10).

2. Assemblage selon la revendication 1, **caractérisé en ce que** les brides (8, 9) appartiennent à des carters de turbine (6, 7) assemblés l'un à l'autre par lesdites brides.

3. Assemblage selon l'une quelconque des revendications 1 ou 2, **caractérisé en ce que** la portion saillant du corps principal comprend une paire d'appuis séparés sur ladite autre bride.

4. Assemblage selon la revendication 3, **caractérisé en ce que** les appuis comprennent des contours arrondis (20) dirigés vers ledit autre carter.

5. Assemblage selon la revendication 3, **caractérisé en ce que** la portion (18) qui prolonge le corps principal (17) consiste en deux ailes séparées, portant chacune un des appuis (20).

## Patentansprüche

1. Anordnung mit einem Sicherungsbolzen (1), zwei übereinanderliegenden Flanschen (8, 9), durch die der Bolzen hindurchgeht, einer Mutter (13), die von einem der Flansche (9) abhängt und in die ein Ende (2) des Bolzens eingeschraubt ist, einer Klemmmutter (14), die in ein gegenüberliegendes Ende (3) des Bolzens eingeschraubt ist, sowie einem Verriegelungsschlüssel (11), der zwischen der Klemmmutter (14) und einem anderen der Flansche (8) festgezogen ist, wobei der Verriegelungsschlüssel einen Hauptkörper (17) aufweist, der mit einer Bohrung (16) versehen ist, wobei die Bohrung einen nicht kreisförmigen Querschnitt aufweist und von einem Abschnitt (4) mit einem dem Bolzen entsprechenden Querschnitt eingenommen ist, **dadurch gekennzeichnet, dass**
der Hauptkörper (17) sich durch einen Abschnitt (18), der sich über eine Kante (10) des anderen Flansches (8) hinaus in eine zu dem Bolzen (1) senkrechte Richtung erstreckt, und sodann durch einen Abschnitt (19) verlängert, der von dem Hauptkörper in Richtung des Bolzens hervorsteht und sich vor der Kante (10) erstreckt.

2. Anordnung nach Anspruch 1, **dadurch gekennzeichnet, dass** die Flansche (8, 9) zu Turbinengehäusen (6, 7) gehören, welche durch die Flansche aneinander montiert sind.

3. Anordnung nach einem der Ansprüche 1 oder 2, **dadurch gekennzeichnet, dass** der von dem Hauptkörper vorstehende Abschnitt ein Paar getrennter Stützen auf dem anderen Flansch aufweist.

4. Anordnung nach Anspruch 3, **dadurch gekennzeichnet, dass** die Stützen abgerundete Konturen (20) aufweisen, die auf das andere Gehäuse gerichtet sind.

5. Anordnung nach Anspruch 3, **dadurch gekennzeichnet, dass** der Abschnitt (18), der den Hauptkörper (17) verlängert, aus zwei getrennten Flügeln besteht, welche jeweils eine der Stützen (20) tragen.

## Claims

1. An assembly comprising a securing stud (1), two superimposed flanges (8, 9) through which the stud passes, a nut (13) depending on one of the flanges (9) and in which one end (2) of the stud is screwed, a tightening nut (14) screwed to an opposite end (3) of the stud, and a locking wrench (11) tightened between the tightening nut (14) and another of the flanges (8), the locking wrench comprising a main body (17) provided with a bore (16), the bore having a non-circular cross-section and being occupied by a corresponding-cross-section portion (4) of the stud, **characterised in that** the main body (17) is extended by a portion (18) extending beyond a border (10) of said other flange (8) in a direction perpendicular to the stud (1) and then by a portion (19) projecting from the main body towards the stud and extending in front of said border (10).

2. The assembly according to claim 1, **characterised in that** the flanges (8, 9) belong to turbine cases (6, 7) assembled to each other by said flanges.

3. The assembly according to any of claims 1 or 2, **characterised in that** the portion projecting from the main body comprises a pair of separated supports on said other flange.

4. The assembly according to claim 3, **characterised in that** the supports comprise rounded contours (20) directed to said other case.

5. The assembly according to claim 3, **characterised in that** the portion (18) which is an extension of the main body (17) consists of two separated wings, each bearing one of the supports (20).
